# EUROPÄISCHE PATENTSCHRIFT

(11) **EP 0 694 135 B1**
(45) Veröffentlichungstag und Bekanntmachung des Hinweises auf die Patenterteilung: **16.07.1997**
(21) Anmeldenummer: 94914404.2
(22) Anmeldetag: 19.04.1994
(51) Int. Cl.: F16H 37/04

(54) **ANORDNUNG EINES GRUPPENGETRIEBES AM GESAMTGETRIEBEGEHÄUSE**
RANGE-CHANGE GEARBOX ARRANGEMENT ON GEARBOX CASING
AGENCEMENT D'UN GROUPE-RELAIS SUR UN CARTER DE BOITE DE VITESSES

(30) Priorität: 23.04.1993 DE 4313345
(43) Veröffentlichungstag der Anmeldung: 31.01.1996
(73) Patentinhaber: ZF FRIEDRICHSHAFEN Aktiengesellschaft, 88038 Friedrichshafen (DE)
(72) Erfinder: BADER, Josef, D-88045 Friedrichshafen (DE); BURI, Gerhard, D-88048 Friedrichshafen (DE)
(86) Internationale Anmeldenummer: EP9401204
(87) Internationale Veröffentlichungsnummer: WO9425780

(56) Entgegenhaltungen:
- EP-A- 0 025 823
- EP-A- 0 437 663
- EP-A- 0 444 497
- WO-A-90/10806
- US-A- 4 793 200

## Beschreibung

Die Erfindung betrifft eine Anordnung an einem Getriebegehäuse nach Oberbegriff des Anspruchs 1.

Bei einem in großen Stückzahlen gefertigten, mehrgängigen Wechselgetriebe ist es bekannt, den Planetensatz einer Bereichsgruppe zusammen mit der Schaltkupplung in einem Bereich außerhalb des Hauptgetriebebereichs anzuordnen. Der Planetensatz und die Kupplung sind dabei vom Hauptgetriebe durch eine Trennwand abgeschieden, in der auch Wellen und Schaltstangen des Hauptgetriebes gelagert sein können. Zur Abstützung von Momenten, beispielsweise ausgeübt durch einen Kupplungskörper der Schaltkupplung, muß die Zwischenwand so ausgestaltet sein, beispielsweise durch die Verstärkung mit Stegen oder Rippen, daß sie den auftretenden Momenten widerstehen kann. Dazu kann sie zwischen Hauptgetriebe und dem Gehäuse der außerhalb angeordneten Bereichsgruppe fest eingeklemmt werden. Das führt zu Schwierigkeiten im Aluminium aufgrund der notwendigen Pressung.

Die Lagerung von Losrädern im Hauptteil des Getriebes geschieht häufig über Lagerbolzen, die im Gehäuse des Getriebes verankert sind. Insbesondere das Zwischenrad der Rückwärtsgangübersetzung bedarf einer separaten Lagerung, da diese nicht mit den Vorgelegewellen des Getriebes verbunden sind.

Ein vereinfachter Aufbau des Getriebes trägt zur Einsparung von Material und Montagezeit bei. Dabei ist es oft vorteilhaft, unterschiedliche Bestandteile der Baugruppen in einem Bauteil zu vereinigen, also mehrere Funktionen mit nur einem entsprechend ausgestalteten Bauteil zu erreichen.

So ist aus der WO 90/10806 ein Gesamtgetriebegehäuse eines vielgängigen Wechselgetriebes bekannt, an dem ein Gruppengetriebe angeordnet ist. Dabei stützt sich ein Element der Schaltkupplung über eine Zwischenplatte am Getriebegehäuse ab, wobei diese Zwischenplatte zwischen den Gehäuseteilen des Hauptgetriebes und des Gruppengetriebes zwischengeklemmt ist. Die dort gezeigte Zwischenplatte ist jedoch nicht in der Lage, weitere Funktionen im Getriebe zu übernehmen.

Aufgabe der Erfindung ist es, eine Anordnung nach dem Oberbegriff des Anspruchs 1 so weiterzubilden, daß von einem Bauteil eines Getriebes weitere Funktionen übernommen werden können.

Die Aufgabe wird durch eine Anordnung mit den kennzeichnenden Merkmalen des Anspruchs 1 gelöst.

Erfindungsgemäß wird eine Gehäusezwischenplatte des Hauptgetriebegehäuses derart ausgestaltet, daß sich das auf einen Kupplungskörper einer Schalteinrichtung des Planetensatzes im Gruppengetriebe ausgeübte Moment während des Schaltvorganges an dieser Gehäusezwischenplatte abstützt. Die Gehäusezwischenplatte selbst stützt sich wiederum über einen oder mehrere Bolzen am Getriebegehäuse ab. Die hier genannten Bolzen tragen in einer weiteren Funktion als Lagerbolzen beispielsweise die Zwischenräder der Rückwärtsgangübersetzung. Auf diese Weise wird der ansonsten lediglich im Gehäuse befestigte Lagerbolzen mit einer erweiterten Funktion versehen, die zu einer sicheren und funktionstüchtigen Abstützung des anstehenden Momentes verwendet werden kann und keine besondere Verstärkung der Getriebezwischenplatte verlangt.

Die Getriebezwischenplatte selbst wird beispielsweise über Schraubverbindungen mit dem Getriebegehäuse fest verbunden. Die Halterung der Lagerbolzen im Getriebegehäuse kann über verschiedene Maßnahmen erreicht werden. Beispielsweise können die Lagerbolzen durch Sicherungsringe axial im Gehäuse in Bohrungen gehalten werden. Dabei sind zwei Sicherungsringe am Außendurchmesser des Lagerbolzens in entsprechende Vertiefungen eingelassen. Beide Sicherungsringe stützen sich jeweils gegen Gehäuseteile ab, so daß ein axiales Verschieben der Lagerbolzen innerhalb ihrer Bohrungen nicht möglich ist. Ebenfalls möglich ist eine Halterung, bei der der Lagerbolzen auf einer Seite an einem Teil im Inneren des Getriebegehäuses anstößt. Am anderen Ende des Lagerungsbolzens ist an seinem Außendurchmesser wiederum eine Vertiefung vorgesehen, in die ein Sicherungsring eingreift. Der Sicherungsring ist dabei so angeordnet, daß er sich von innen gegen des Gehäuse abstützt und so eine axiale Verschiebung des Lagerbolzens in seiner Gehäusebohrung verhindert.

Die Lagerbolzen können massiv ausgestaltet sein oder aber auch in sich selbst wiederum eine Bohrung aufweisen. In einer derartigen Bohrung könnte beispielsweise wiederum die Schaltstange für eine weitere Schalteinrichtung gelagert sein. Lagerbolzen in beiden genannten Ausführungen können dabei bis zur Getriebezwischenplatte reichen oder aber auch aus dem Getriebegehäuse heraus durch die Zwischenplatte hindurch und über diese hinaus reichen.

Ebenfalls möglich ist auch die Ausgestaltung in der Form, daß das Zahnrad auf dem Bolzen gelagert ist, aber axial einer-seits vom Getriebegehäuse und andererseits von einer auf den Lagerbolzen ebenfalls aufgeschobenen Hülse oder einem Ring gehalten wird. Hülse oder Ring sind dann wiederum an der Gehäusezwischenplatte gehalten. Dazu ist beispielsweise am Außendurchmesser der Hülse eine Vertiefung für einen Sicherungsring vorgesehen, der sich vom Gehäuseinneren an der Zwischenplatte abstützt. Gleichzeitig ist am Innendurchmesser der Hülse ein weiterer Sicherungsring vorgesehen, der eine axiale Verschiebung des Lagerbolzens innerhalb der Hülse verhindert. Am anderen Ende des Lagerbolzens ist dieser dann wiederum durch einen dritten Sicherungsring am Getriebegehäuse gehalten. Der das Moment in die Gehäusezwischenplatte einleitende Kupplungsring einer Schalteinrichtung ist mit der Abdeckplatte verschweißt. Denkbar ist aber auch die Kombination, daß Zwischenplatte und Kupplungsring einteilig ausgestaltet sind.

Schwierigkeiten bei der Pressung von Aluminium können durch die erfindungsgemäße Anordnung ebenso vermieden werden wie die Erfordernis von extra Bohrungen für Lagerstifte oder -bolzen für Getrieberäder. Bevorzugter Einsatzbereich der erfindungsgemäßen Anordnung sind Zwei-Vorgelegewellen-Getriebe.

Die Erfindung wird anhand von Zeichnungen näher erläutert.
Es zeigen:
- Fig. 1: die Darstellung eines Getriebegehäuses mit der erfindungsgemäßen Anordnung;
- Fig. 2: eine Darstellung der Zuordnung der Zwischenplatte zu einer Schalteinrichtung;
- Fig. 3: die Darstellung der Abstützung der Zwischenplatte am Gehäuse;
- Fig. 4: eine Variante nach Fig. 3 und
- Fig. 5: eine weitere Variante der erfindungsgemäßen Anordnung.

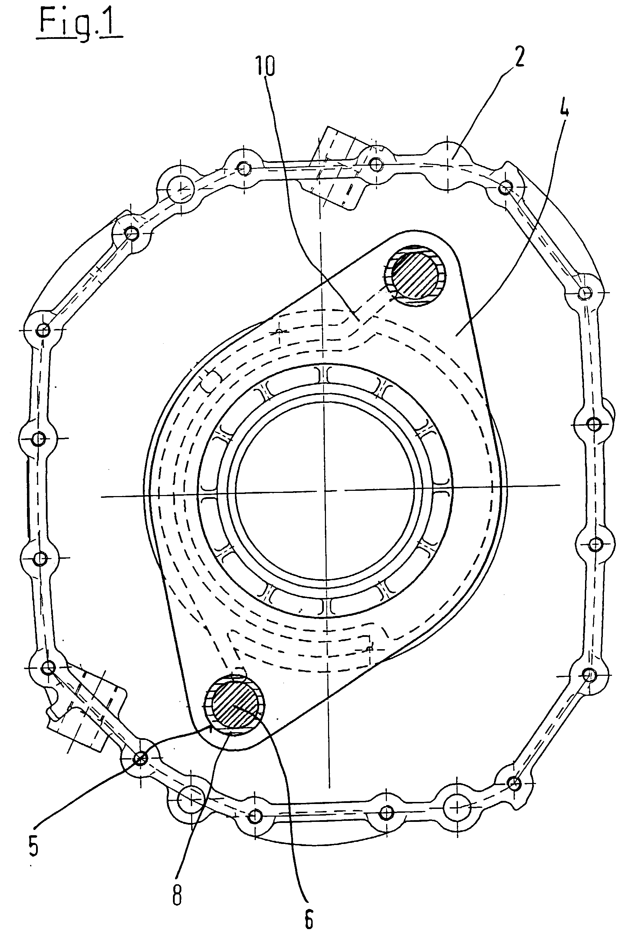

Die Fig. 1 zeigt eine prinzipielle Darstellung der erfindungsgemäßen Anordnung. An dem Getriebegehäuse 2 ist eine Zwischenplatte 4 vorgesehen. Die Zwischenplatte 4 weist Ausnehmungen 5 auf, in denen Bolzen 6 angeordnet sind. Diese Bolzen 6 können in Hülsen 8 geführt sein. Über die Bolzen 6 und gegebenenfalls die Hülsen 8 stützt sich die Zwischenplatte 4 am Gehäuse 2 ab. Über Ölzuführleitungen 10 kann an Lagerstellen der Bolzen benötigtes Schmiermittel zugeführt werden. Die Ölzuführleitungen 10 können dabei beispielsweise als offene Kanäle in das Gehäuse 2 eingearbeitet sein und werden durch die Zwischenplatte 4 abgeschlossen.

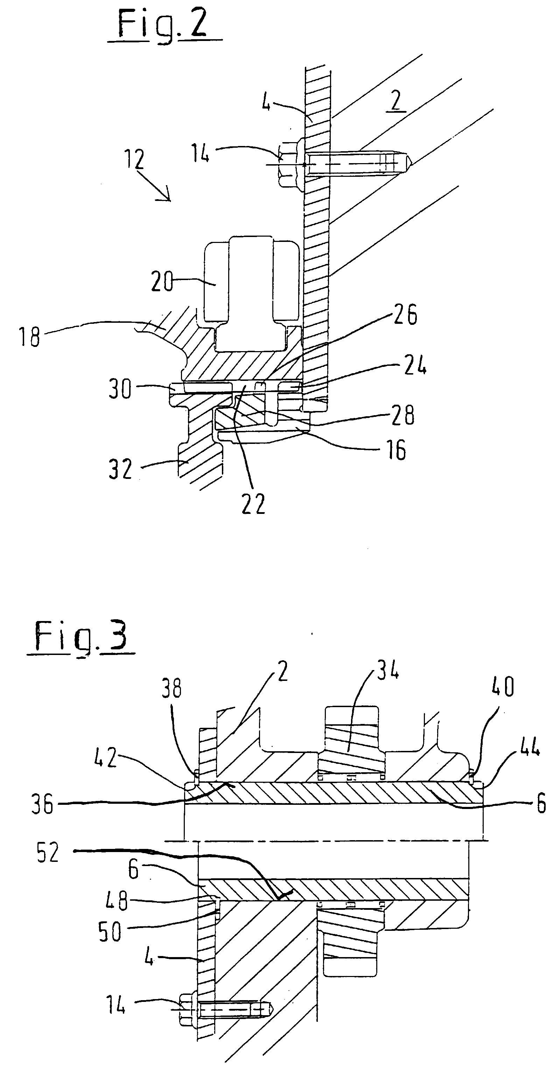

Die Fig. 2 zeigt einen Ausschnitt aus dem Getriebe, bei dem eine Schalteinrichtung 12 schematisch zu sehen ist. Die Zwischenplatte 4 ist durch eine Schraubverbindung 14 mit dem Getriebegehäuse 2 fest verbunden. An der Zwischenplatte 4 ist ein Kupplungskörper 16 der Schalteinrichtung 12 befestigt. Die Befestigung kann durch Schweißen vorgenommen werden. Es ist als eine Ausgestaltung aber auch möglich, den Kupplungskörper 16 direkt als Bestandteil der Zwischenplatte 4 vorzusehen. Die Schaltmuffe 18 der Schalteinrichtung 12 kann mit einer Vorrichtung 20 üblicherweise über hier nicht gezeigte Mittel mechanisch, hydraulisch, pneumatisch oder elektrisch axial verschoben werden. Die Innenverzahnung 22 der Schaltmuffe 18 kommt dabei mit der Außenverzahnung 24 des Kupplungskörper 16, der Außenverzahnung 26 des Synchronisierungsringes 28 und der Außenverzahnung 30 des Synchronkörpers 32 in Eingriff. Die Fig. 2 zeigt den Zustand der festen Verbindung zwischen Synchronkörper 32 und Kupplungskörper 16. In Fig. 2 bedeutet eine axiale Verschiebung der Schaltmuffe 18 eine Bewegung nach rechts bzw. links in der Zeichenebene.

Der Kupplungskörper 16 der Schalteinrichtung 12, beispielsweise eines hier nicht gezeigten Planetensatzes eines Gruppengetriebes, stützt das ausgeübte Moment während des Schaltvorganges an dieser Zwischenplatte 4 ab. Die Zwischenplatte 4 selbst stützt sich wiederum über einen oder mehrere Bolzen 6 am Getriebegehäuse 2 ab.

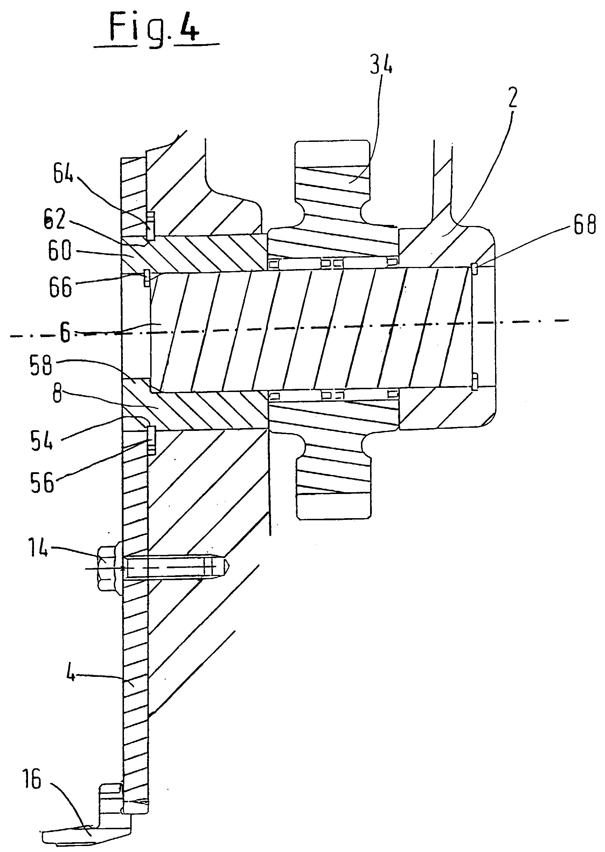

Die Fig. 3 zeigt, daß die hier genannten Bolzen 6 in einer weiteren Funktion als Lagerbolzen beispielsweise die Zwischenräder 34 der Rückwärtsgangübersetzung tragen. Dabei sind zwei Varianten der Halterung gezeigt, die einmal im oberen Teil und einmal im unteren Teil dargestellt sind. Auf diese Weise wird der ansonsten lediglich im Gehäuse 2 befestigte Bolzen 6 mit einer erweiterten Funktion versehen, die zu einer sicheren und funktionstüchtigen Abstützung des anstehenden Momentes verwendet werden kann und dennoch keine besondere Verstärkung der Zwischenplatte 4 verlangt.

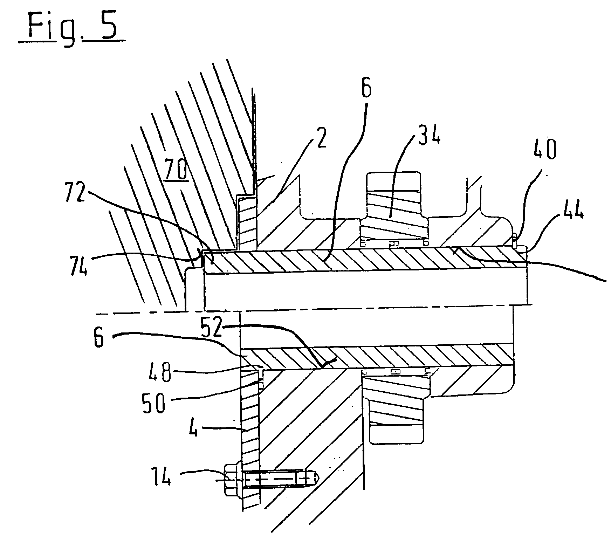

Die Zwischenplatte 4 selbst wird beispielsweise über Schraubverbindungen 14 mit dem Getriebegehäuse 2 fest verbunden. Möglich ist auch die Halterung der Zwischenplatte 4 zwischen Gehäuseteilen (siehe Fig. 5). Die Halterung der Lagerbolzen 6 im Getriebegehäuse 2 kann über verschiedene Maßnahmen erreicht werden. Beispielsweise können die Lagerbolzen 6 durch Sicherungsringe axial im Gehäuse 2 in Bohrungen 36 gehalten werden, wie im oberen Teil der Fig. 3 dargestellt. Dabei sind zwei Sicherungsringe 38 und 40 am Außendurchmesser des Lagerbolzens 6 in entsprechende Vertiefungen 42, 44 eingelassen. Beide Sicherungsringe 38, 40 stützen sich gegen das Gehäuse 2 ab, so daß ein axiales Verschieben der Lagerbolzen 6 innerhalb ihrer Bohrungen 36 nicht möglich ist. Ebenfalls möglich, und im unteren Teil der Fig. 3 dargestellt, ist eine Halterung, bei der der Lagerbolzen 6 an seinem Außendurchmesser eine Vertiefung 48 aufweist, in die ein Sicherungsring 50 eingreift. Der Sicherungsring 50 ist dabei so angeordnet, daß er zwischen der Zwischenplatte 4 und dem Gehäuse 2 liegt und so eine axiale Verschiebung des Lagerbolzens 6 in seiner Gehäusebohrung 52 verhindert wird.

Die Lagerbolzen 6 können massiv ausgestaltet sein oder aber auch in sich selbst wiederum eine Bohrung aufweisen. In einer derartigen Bohrung könnte beispielsweise wiederum die Schaltstange für eine weitere Schalteinrichtung gelagert sein. Lagerbolzen 6 in beiden genannten Ausführungen können dabei bis zur Zwischenplatte 4 reichen oder aber auch aus dem Getriebegehäuse 2 heraus durch die Zwischenplatte 4 hindurch und über diese hinaus reichen.

Ebenfalls möglich ist auch die Ausgestaltung nach Fig. 4 in der Form, daß das Zahnrad 34 auf dem Bolzen 6 gelagert ist, aber axial einerseits vom Getriebegehäuse 2 und andererseits von einer auf den Lagerbolzen ebenfalls aufgeschobenen Hülse oder einem Ring gehalten wird. Hülse oder Ring sind dann zwischen der Zwischenplatte 4 und dem Gehäuse 2 gehalten. Dazu ist beispielsweise im unteren Teil der Fig. 4 am Außendurchmesser einer Hülse 8 eine Vertiefung 54 für einen Sicherungsring 56 vorgesehen, der zwischen Gehäuse 2 und Zwischenplatte 4 liegt. Die Hülse 8 verfügt dann über einen Vorsprung 58, der eine axiale Verschiebung des Bolzens 6 verhindert. In einer anderen Ausgestaltung im oberen Teil der Fig. 4 weist eine Hülse 60 am Außendurchmesser eine Vertiefung 62 für einen Sicherungsring 64 auf, der ebenfalls zwischen Gehäuse 2 und Zwischenplatte 4 liegt. Gleichzeitig ist am Innendurchmesser der Hülse 60 ein weiterer Sicherungsring 66 vorgesehen, der eine axiale Verschiebung des Lagerbolzens 6 innerhalb der Hülse 60 verhindert.

In beiden Fällen kann zusätzlich am anderen Ende des Lagerbolzens 6 dieser durch einen dritten Sicherungsring 68 am Getriebegehäuse 2 gehalten sein.

Der ein Moment in die Zwischenplatte einleitende Kupplungskörper 16 einer hier nicht gezeigten Schalteinrichtung ist mit der Zwischenplatte 4 verschweißt. Denkbar ist aber auch die Kombination, daß Zwischenplatte 4 und Kupplungskörper 16 einteilig ausgestaltet sind.

Durch eine axiale Verlängerung der Lagerbolzen in weitere angrenzende Getriebeteile hinein lassen sich diese Getriebeteile in ihrer Lage fixieren.

Die Fig. 5 zeigt dazu schematisch eine abgewandelte Anordnung, bei der die Zwischenplatte 4 nicht durch eine Schraubverbindung an einem Gehäuseteil 2 befestigt, sondern zwischen zwei Gehäuseteilen 2 und 70 gehalten ist. Die Zwischenplatte 4 wird dabei zwischen den Gehäuseteilen 2 und 70 nicht verklemmt. Das von der Schalteinrichtung ausgeübte Moment wird hier nicht übertragen, sondern die Zwischenplatte 4 wird lediglich in axialer Richtung der Wellen gehalten. Der Lagerbolzen 6 ist hier verlängert dargestellt. Das verlängerte Ende 72 des Bolzens 6 greift in Vertiefungen 74 des Gehäuseteils 70 ein. Dadurch lassen sich die Gehäuseteile 2 und 70 in ihrer Lage zueinander fixieren. Die weiteren Bezugszeichen der Fig. 5 entsprechen denen der Fig. 3.

### Bezugszeichen

- 2: Getriebegehäuse
- 4: Zwischenplatte
- 5: Ausnehmungen
- 6: Bolzen
- 8: Hülse
- 10: Ölzuführleitung
- 12: Schalteinrichtung
- 14: Schraubverbindung
- 16: Kupplungskörper
- 18: Schaltmuffe
- 20: Vorrichtung
- 22: Innenverzahnung
- 24: Außenverzahnung
- 26: Außenverzahnung
- 28: Synchronring
- 30: Außenverzahnung
- 32: Synchronkörper
- 34: Zwischenrad
- 36: Bohrung
- 38: Sicherungsring
- 40: Sicherungsring
- 42: Vertiefung
- 44: Vertiefung
- 48: Vertiefung
- 50: Sicherungsring
- 52: Gehäusebohrung
- 54: Vertiefung
- 56: Sicherungsring
- 58: Vorsprung
- 60: Hülse
- 62: Vertiefung
- 64: Sicherungsring
- 66: Sicherungsring
- 68: Sicherungsring
- 70: Getriebegehäuse
- 72: verlängertes Ende
- 74: Vertiefung

## Patentansprüche

1. Anordnung eines Gruppengetriebes im Gesamtgetriebegehäuse (2) eines vielgängigen Wechselgetriebes, wobei eine Schaltkupplung (16, 18, 28, 32) des Gruppengetriebes durch eine lösbare Zwischenplatte (4) vom übrigen Gehäuse (2) getrennt ist und sich ein Teil (16) der Schaltkupplung (16, 18, 28, 32) an der Zwischenplatte (4) abstützt, dadurch **gekennzeichnet,** daß die Zwischenplatte (4) sich über Lagerelemente (6, 8, 60) von Getrieberädern (34) am Getriebegehäuse (2) abstützt.

2. Anordnung eines Gruppengetriebes nach Anspruch 1, dadurch **gekennzeichnet,** daß die Getrieberäder (34) Zwischenräder der Rückwärtsgangübersetzung sind.

3. Anordnung eines Gruppengetriebes nach Anspruch 1, dadurch **gekennzeichnet,** daß Bolzen (6) zur Lagerung der Getrieberäder (34) vorgesehen sind.

4. Anordnung eines Gruppengetriebes nach Anspruch 3, dadurch **gekennzeichnet,** daß die Bolzen (6) in Hülsen (8, 60) gehalten sind.

5. Anordnung eines Gruppengetriebes nach Anspruch 1, dadurch **gekennzeichnet,** daß Sicherungsvorrichtungen (38, 40, 50, 56, 64, 66, 68) zur Verhinderung einer Verschiebung der Lagerung vorgesehen sind.

6. Anordnung eines Gruppengetriebes nach Anspruch 3 oder 4, dadurch **gekennzeichnet,** daß die Bolzen (6) hohl sind.

7. Anordnung eines Gruppengetriebes nach wenigstens einem der Ansprüche 3-6, dadurch **gekennzeichnet,** daß in dem Getriebegehäuse (2) offene Ölführungskanäle (10) eingearbeitet sind, die durch die Zwischenplatte (4) abgeschlossen sind.

8. Anordnung eines Gruppengetriebes nach wenigstens einem der Ansprüche 3-6, dadurch **gekennzeichnet,** daß die Bolzen (6) in wenigstens ein an die Getrieberadlagerung angrenzendes weiteres Gehäuseteil (70) eingreifen.

## Claims

1. An arrangement of an auxiliary transmission in the main gear casing (2) of a multi-speed gear, a clutch (16, 18, 28, 32) of the auxiliary transmission being separated from the rest of the casing (2) by a releasable intermediate plate (4) and a part (16) of the clutch (16, 18, 28, 32) being supported on the intermediate plate (4), characterised in that the intermediate plate (4) is supported on the gear casing (2) via bearing elements (6, 8, 60) of gear wheels (34).

2. An arrangement of an auxiliary transmission according to claim 1, characterised in that the gear wheels (34) are intermediate gears of the reverse gear transmission.

3. An arrangement of an auxiliary transmission according to claim 1, characterised in that bolts (6) are provided for mounting the gear wheels (34).

4. An arrangement of an auxiliary transmission according to claim 3, characterised in that the bolts (6) are held in sleeves (8, 60).

5. An arrangement of an auxiliary transmission according to claim 1, characterised in that safety devices (38, 40, 50, 56, 64, 66, 68) are provided for preventing a displacement of the mounting.

6. An arrangement of an auxiliary transmission according to claim 3 or 4, characterised in that the bolts (6) are hollow.

7. An arrangement of an auxiliary transmission according to at least one of claims 3 to 6, characterised in that open oil supply ducts (10) are machined in the gear casing (2), which ducts are closed by the intermediate plate (4).

8. An arrangement of an auxiliary transmission according to at least one of claims 3 to 6, characterised in that the bolts (6) engage in at least one further casing part (70) adjoining the gear wheel mounting.

## Revendications

1. Agencement d'un groupe-relais monté dans un boîtier général (2) d'une boîte de vitesses à rapports multiples, dans lequel un embrayage (16, 18, 28, 32) du groupe-relais est séparé du reste du boîtier (2) par une plaque intermédiaire (4) amovible et une partie (16) de l'embrayage (16, 18, 28, 32) prend appui contre la plaque intermédiaire (4), **caractérisé en ce que** la plaque intermédiaire (4) s'appuie sur le boîtier (2) par l'intermédiaire d'éléments de paliers (6, 8, 60) des pignons de la boîte de vitesses.

2. Agencement d'un groupe-relais selon la revendication 1, **caractérisé en ce que** les pignons (34) de la boîte de vitesses sont des roues dentées intermédiaires du rapport de marche arrière.

3. Agencement d'un groupe-relais selon la revendication 1, **caractérisé en ce qu**'il comporte des boulons (6) pour monter les pignons (34) de la boîte de vitesses.

4. Agencement d'un groupe-relais selon la revendication 3, **caractérisé en ce que** les boulons (6) sont disposés dans des douilles (8, 60).

5. Agencement d'un groupe-relais selon la revendication 1, **caractérisé en ce qu'**il comporte des dispositifs de sécurité (38, 40, 50, 56, 66, 68) pour empêcher un décalage de l'assemblage.

6. Agencement d'un groupe-relais selon les revendications 3 ou 4, **caractérisé en ce que** les boulons (6) sont creux.

7. Agencement d'un groupe-relais selon au moins une des revendications 3 à 6, **caractérisé en ce que** le boîtier (2) comporte des canaux de circulation d'huile (10) ouverts, qui sont fermés par la plaque intermédiaire (4).

8. Agencement d'un groupe-relais selon au moins une des revendications 3 à 6, **caractérisé en ce que** les boulons (6) sont en prise dans au moins une autre partie (70) du boîtier adjacente aux paliers des pignons de la boîte de vitesses.
